# EUROPEAN PATENT SPECIFICATION

(11) **EP 0 444 744 B1**
(45) Date of publication and mention of the grant of the patent: **29.12.1993**
(21) Application number: 91200390.2
(22) Date of filing: 23.02.1991
(51) Int. Cl.: B23D 25/02, B26D 1/40

(54) **Improved blades for rotary cutter used for fly cutting metal section**
Verbesserte Messer für ein rotierendes Schneidwerk zum fliegenden Schneiden von Metallteilen
Couteaux améliorés pour une fraise rotative, utilisée pour la coupe volante des sections en métal

(30) Priority: 26.02.1990 IT 1949190
(43) Date of publication of application: 04.09.1991
(73) Proprietor: POMINI S.p.A., 21053 Castellanza (VA) (IT)
(72) Inventor: Matovan, Gianfranco, I-21052 Busto Arsizio, Varese (IT)
(74) Representative: Fusina, Gerolamo

(56) References cited:
- DD-A- 158 093
- DE-A- 3 635 991

## Description

The present invention relates to a rotary cutter according to the preamble of claim 1.

As is well known to experts within the field, in a rotary cutter of the above-mentioned type, a pair of opposing blades, top and bottom, are mounted on one end of respective arms which, at their oppposite end, are operationally linked to a control system which sets them in rotary motion.

The metal section to be cut is passed through the opposing blades; at each complete rotation of 360° of the blades one cut of the section is made, the extent of which depends both on its speed of advance and on the average speed of rotation of the arms.

A rotary cutter of this type is for example described in IT-A 1 187 545.

It is clear how the blades, moving through an arc of circumference, perform a cut which is not perpendicular to the axis of advance of the section. More precisely, the cutting edge of the blades has a involute profile corresponding to the contour of the side guide teeth present on both the top and bottom blades in order to prevent an interference, known commonly as an "overlap", during the cutting stage. The teeth of both blades are in fact cylindrical teeth, with an involute profile, to ensure continuity of contact from the beginning to the end of the cut and the cutting edges of the blades lie in the same planes as the involute profile of the teeth.

Consequently, the cut product has an oblique cut depending on the angle of the involute which is normally between 15 and 20° and must be subjected to a subsequent cut at its head, a so called "heading" operation, since the market requires that the ends of the metal sections should be cut along a plane normal to the longitudinal axis of the section.

Section "heading" is a costly operation, as regards time, the considerable waste of material that it involes and the use of an additional cutting device on the machining line.

In order to avoid this problem, rotary cutters have been proposed in which the blades, at least during the cutting stage, move along planes at right angles to the axis of advance of the section due to complicated parallelogram-connection systems and similar kinematic mechanisms.

Rotary cutters of this type, however, operate at considerably slower speeds than those of the cutters previously described due to the masses involved and the complex connection linkages of the blade-carrier arms.

This fact is contrary to and goes against the tendency of having lines in which the sections being machined advance at increasingly higher speeds.

The general aim of the present invention is to avoid the state of the art problems by making blades for flying cutters with a configuration such as to cut the section along a plane which is essentially normal to the longitudinal axis of the section itself.

For this purpose has been built, according to the present invention, a rotary cutter for fly cutting metal sections of the type comprising a pair of opposing blades, top and bottom, which at one end have arms operationally linked to a control system capable of setting them in rotary motion, the said blades having guide teeth co-operating with them capable of preventing interference of the cutting edges of the blades during the cutting stage, characterised in that the said cutting edges are straight and lie in different planes to those in which the said guide teeth lie, the latter having a curved contour which ensures that the cut occurs in a plane which is essentially perpendicular to the longitudinal axis of the metal section to be cut.

The structural and operational characteristics of the invention and its advantages as compared to the known state of the art will be better understood from the following description, relating to the attached drawings which show an example of a cutter incorporating the principles of this invention. In these drawings:
- Figure 1 is a front view of the top blade of the cutter;
- Figure 2 is a front view of the bottom blade of the cutter;
- Figure 3 is a section along Line III-III of Figure 1;
- Figure 3A is an enlarged detail of the blade in Figure 3;
- Figure 4 is a section along Line IV-IV of Figure 2;
- Figure 4A is an enlarged detail of the blade in Figure 4;
- Figures 5, 6 and 7 are front views showing the significant positions of the blades in Figures 1-4 during the stage of cutting a metal section;
- Figure 8 is a schematic view showing the reciprocal positions assumed by the cutting edges of the two blades during the cutting stage;
- Figure 9 is a sectional view of the cut section;
- Figures 10 to 13 are schematic views showing the reciprocal positions assumed by the blades and the respective guide teeth during the cutting stage in the blades made according to the invention; and
- Figures 14 to 16 are views showing the reciprocal positions assumed by the cutting edges and the respective guide teeth in blades of a known type during the stage of cutting the same metal section.

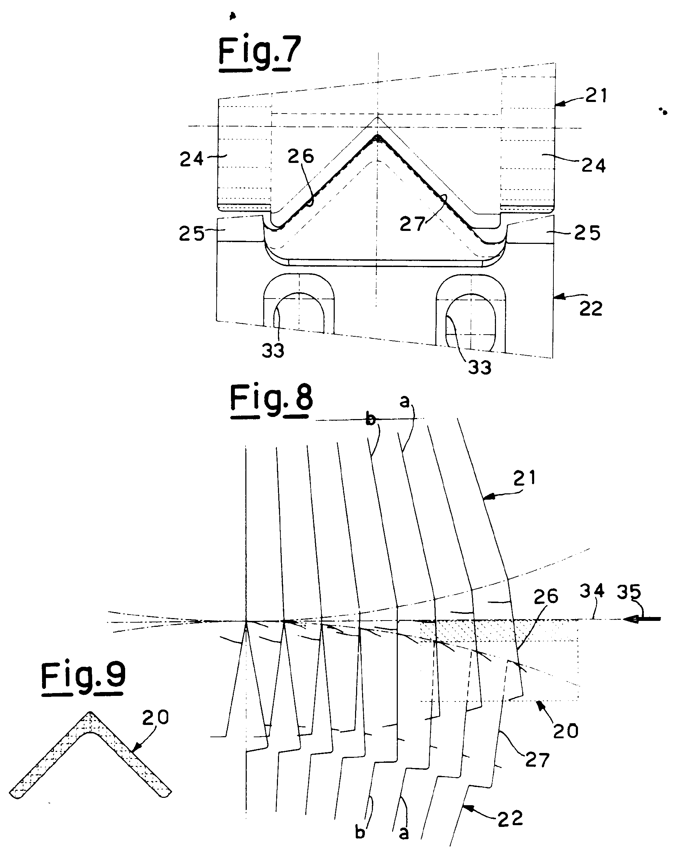

In the drawings, purely by way of a non-restrictive example, a pair of blades is shown used for cutting a metal section 20 as shown in Figure 9 of the drawings, but clearly the same inventive idea may be applied to create blades suitable for cutting sections with a different cross-section.

With reference to the Figures, 21 and 22 show respectively the top and bottom blades made according to the invention.

These blades have a body 23 comprising a metal forging in which is cut a pair of gear teeth 24 and 25 between which extend cutting edges 26 and 27 which have a configuration identical to that of the section to be cut.

According to the present invention, cutting edges 26 and 27 of the two blades 21 and 22 have perfectly straight, rather than involute profiles as in the known state of the art, straight profiles which differ from those of the curved contours 28 and 29 of the respective guide teeth 24 and 25 and which form with the latter a certain angle.

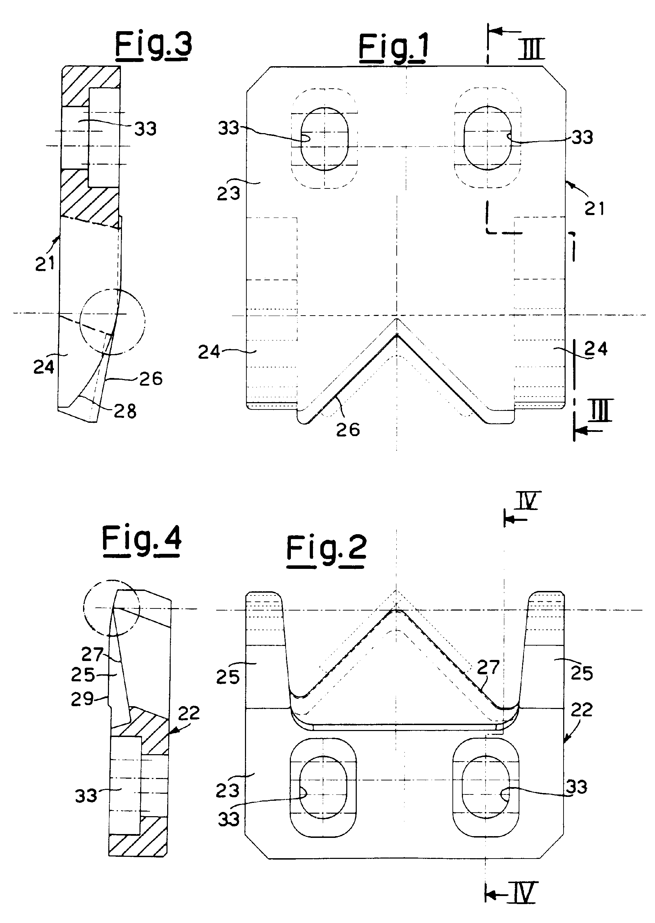

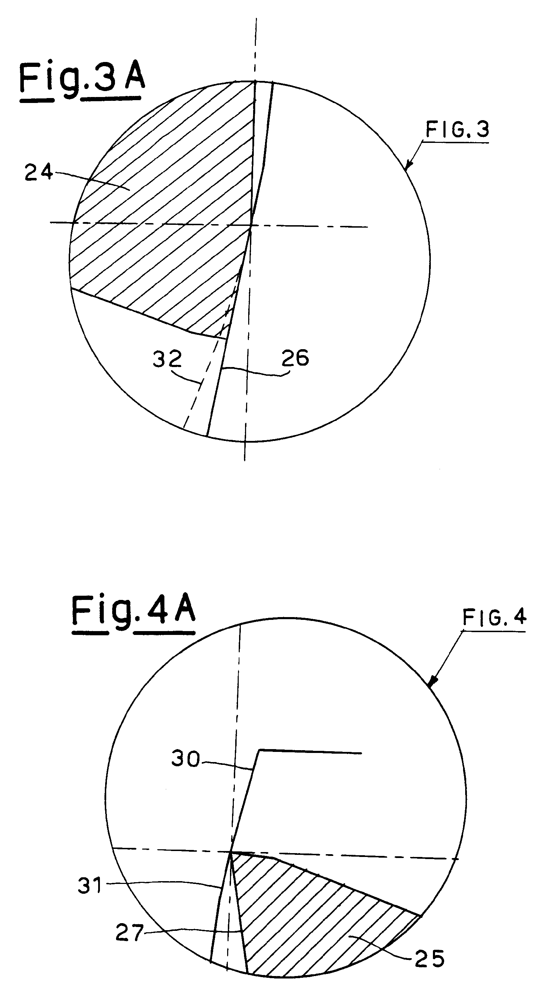

Indeed, Figures 3 and 3A of the drawings show how contour 28 of teeth 24 comprises an involute curved line 32 and how the said contour is internal to cutting edge 26, forming with it a certain angle.

Similarly, Figures 4 and 4A of the drawings show how contour 29 of teeth 25 comprises two curved lines 30 and 31 of a different radius and how the said contour is external to cutting edge 27, forming with it a certain angle.

33 shows the holes through which pass the bolts for fixing the blades to the blade-carrier arms of the flying cutter, such arms may be of any type well known to the experts within the field and therefore not shown here in detail.

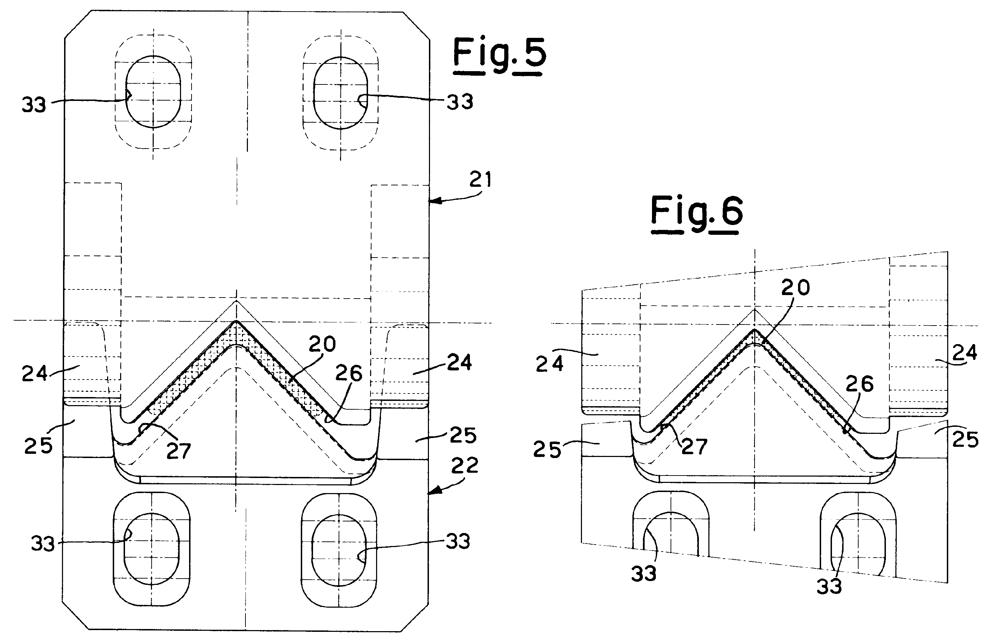

Figures 5, 6 and 7 of the drawings clearly show a front view of the significant cutting stages of the blades according to the invention.

In Figure 5 blades 21 and 22 come into contact with metal section 20, while at the same time guide teeth 24 and 25 engage with each other so as to prevent any interference (overlap) between the blades during the cutting stage.

Figure 6 shows the intermediate cutting stage and Figure 7 the final stage in which the separation of the end of the section head occurs.

The above cutting stage described with reference to Figures 5, 6 and 7 is also clearly shown schematically in Figure 8 of the drawings which clearly illustrates how cutting edges 26 and 27 of top blade 21 and bottom blade 22 respectively during the cutting stage operate essentially perpendicular to axis 34 of section 20 made to advance in the direction of arrow 35. Cutting of metal section 20 begins in position a of the blades and ends in position b.

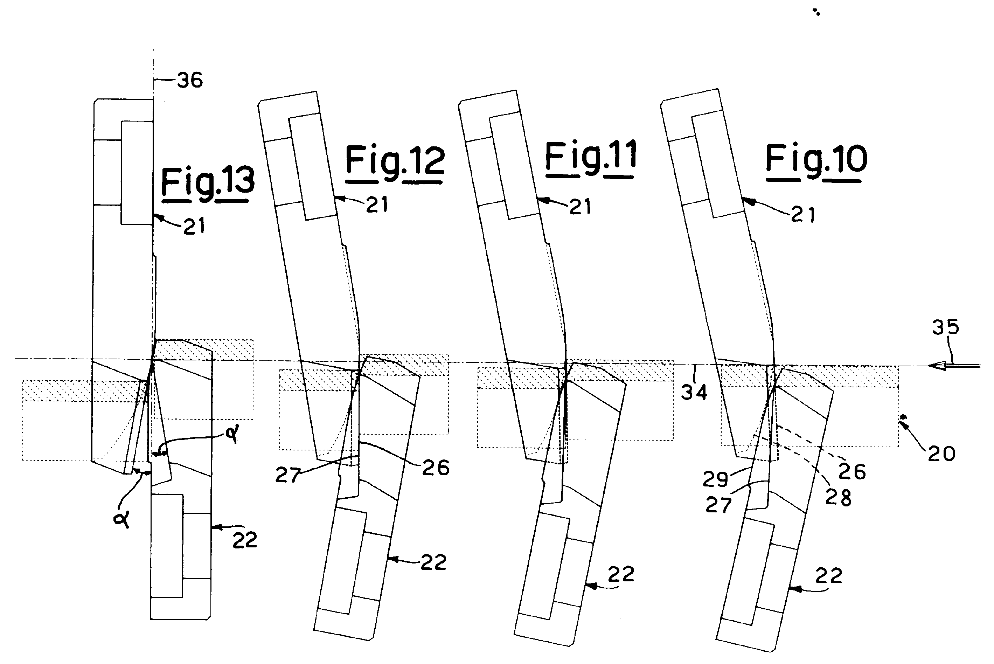

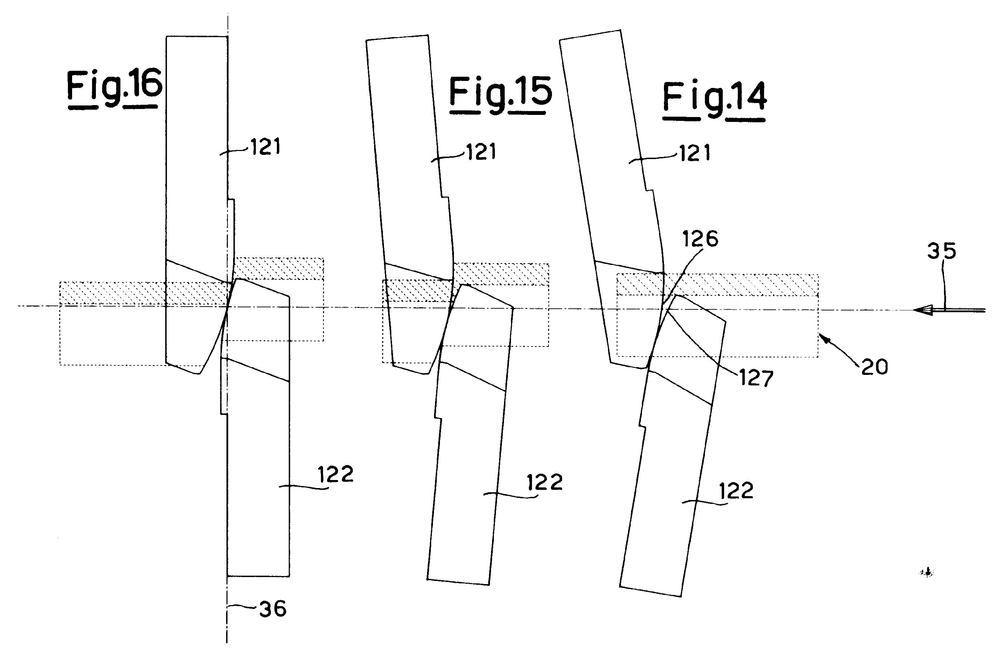

The same cutting stage is shown in Figures 10 to 13 where it is possible to see in greater detail the reciprocal position of cutting edges 26 and 27 of contours 28 and 29 of guide teeth 24 and 25. In Figures 10 and 11 (corresponding to Figures 5 and 6) it is possible to see how, when the two blades are in the initial and intermediate cutting stages, the respective cutting edges 26 and 27 are in a position which is already very close to the position normal to the axis of advance, in the direction of arrow 35, of the metal section 20 to be cut, while the contours of guide teeth 24 and 25 are still in contact to prevent the cutting edges from overlapping.

Perfect perpendicularity of cutting edges 26 and 27 in relation to axis 34 of metal section 20 is achieved in the final cutting position shown in Figure 12.

Figure 13 shows the reciprocal position of the blades along centre line 36 of the cutter and the complete separation of the end of the cut section from the head of the advancing section.

On comparing the operating principle of the blades according to the invention shown in Figures 10 to 13 with that of blades 121, 122 of a known type shown in Figures 14 to 16, the considerable difference between the two cuts obtained appears clear.

By using blades of the type shown in Figures 14-16, the cut obtained is oblique and forms, at best, an angle of between 15 and 20° in relation to the longitudinal axis of the section. This is because, as stated above, cutting edges 126 and 127 of the blades have an involute profile which coincides with the involute profile of the guide teeth, which lies in the same plane as the cutting edge of the blade.

By contrast, in the blades made according to the invention, characteristically, the cutting edges of the blades have a straight edge which differs from the curved edge of the guide teeth, which lie in different planes and form a certain angle in relation to them.

Indeed, according to the present invention, guide teeth 24 and 25 of the blades are made in an involute arc of between 10 and 20°, preferably in an arc of 10°, whereas the cutting edges of the blades form in relation to the vertical central axis 36 of the cutter an angle alpha (Figure 13) of between 5 and 20°, preferably 10°.

In this way due to the configuration of the profiles of the cutting edges and guide teeth, and to their respective reciprocal position, it is possible to achieve a cut which is essentially perpendicular to the longitudinal axis of the product to be cut.

## Claims

1. A rotary cutter for fly cutting metal sections (20) of the type comprising a pair of opposing blades (21,22), top and bottom, which at one end have arms operationally linked to a control system capable of setting them in rotary motion, the said blades having guide teeth (24,25) co-operating with them capable of preventing interference of the cutting edges (26,27) of the blades during the cutting stage, characterised in that the said cutting edges are straight and lie in different planes to those in which the said guide teeth lie, the latter having a curved contour which ensures that the cut occurs in a plane which is essentially perpendicular to the longitudinal axis of the metal section to be cut.

2. A rotary cutter according to Claim 1, characterised in that the guide teeth of the blades are in an involute arc of between 10 and 20°, whereas the cutting edges of the blades form in relation to the vertical central axis of the cutter an angle of between 5 and 20°.

3. A rotary cutter according to Claim 1, characterised in that the guide teeth of the blades are made in an involute arc of 10°.

4. A rotary cutter according to Claim 1, characterised in that the cutting edges of the blades form in relation to the vertical central axis of the cutter an angle of 10°.

## Patentansprüche

1. Rotierendes Schneidwerk zum fliegenden Schneiden von Metallteilen (20), umfassend ein Paar von einander gegenüberliegenden, oberen und unteren Messern (21,22), welche an einem Ende Arme aufweisen, welche mit einem Kontroll- und Steuersystem, welches sie in eine Rotationsbewegung zu versetzen geeignet ist, verbunden sind, wobei die Messer mit diesen zusammenwirkende Führungszähne (24,25) aufweisen, welche ein Zusammentreffen der Schneidkanten (26,27) der Messer während des Schneidvorganges zu verhindern geeignet sind, dadurch gekennzeichnet, daß die Schneidkanten gerade ausgebildet sind und in von den Ebenen, in welchen die Führungszähne liegen, unterschiedlichen Ebenen liegen, wobei letztere eine gekrümmte Kontur aufweisen, welche sicherstellt, daß der Schnitt in einer Ebene erfolgt, welche im wesentlichen normal auf die Längsachse des zu schneidenden Metallteiles liegt.

2. Rotierendes Schneidwerk nach Anspruch 1, dadurch gekennzeichnet, daß die Führungszähne der Messer einen Winkel zwischen 10° und 20° einschließen, wobei die Schneidkanten der Messer relativ zur zentralen, vertikalen Achse des Schneidwerks einen Winkel zwischen 5° und 20° ausbilden.

3. Rotierendes Schneidwerk nach Anspruch 1, dadurch gekennzeichnet, daß die Führungszähne der Messer einen Winkel von 10° einschließen.

4. Rotierendes Schneidwerk nach Anspruch 1, dadurch gekennzeichnet, daß die Schneidkanten der Messer relativ zur zentralen, vertikalen Achse des Schneidwerks einen Winkel von 10° ausbilden.

## Revendications

1. Fraise rotative pour la coupe volante de sections en métal (20) du type comprenant deux couteaux en vis-à-vis (21, 22), un couteau supérieur, un couteau inférieur qui, à une extrémité, sont fixés à des bras fonctionnellement reliés à un système de commande conçu pour leur communiquer un mouvement rotatif, lesdits couteaux ayant des dents de guidage (24, 25) coopérant avec eux et capables d'empêcher l'interférence des bords tranchants (26, 27) des couteaux pendant le stade d'usinage, caractérisée en ce que lesdits bords tranchants sont rectilignes et situés dans des plans différents des plans dans lesquels se situent lesdites dents de guidage, ces dernières ayant un contour courbe, ce qui garantit que la coupe se fait dans un plan qui est essentiellement perpendiculaire à l'axe longitudinal de la section en métal à usiner.

2. Fraise rotative selon la revendication 1, caractérisée en ce que les dents de guidage des couteaux ont la forme d'un arc développé compris entre 10 et 20°, tandis que les bords tranchants des couteaux forment par rapport à l'axe central vertical de la fraise un angle compris entre 5 et 20°.

3. Fraise rotative selon la revendication 1, caractérisée en ce que les dents de guidage des couteaux sont fabriqués avec un arc développé de 10°.

4. Fraise rotative selon la revendication 1, caractérisée en ce que les bords tranchants des couteaux font, par rapport à l'axe central vertical de la fraise, un angle de 10°.
